(19) **Europäisches Patentamt**
**European Patent Office**
**Office européen des brevets**

(11) **EP 2 213 618 B1**

(12) **EUROPEAN PATENT SPECIFICATION**

(45) Date of publication and mention
of the grant of the patent:
**03.04.2013 Bulletin 2013/14**

(51) Int Cl.:
*C01B 3/36* *(2006.01)* *B01J 19/08* *(2006.01)*
*C01B 3/32* *(2006.01)* *C01B 3/38* *(2006.01)*

(21) Application number: **08843861.9**

(22) Date of filing: **20.10.2008**

(86) International application number:
**PCT/JP2008/068957**

(87) International publication number:
**WO 2009/057473 (07.05.2009 Gazette 2009/19)**

(54) **PLASMA REACTOR**

PLASMAREAKTOR

RÉACTEUR À PLASMA

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.10.2007 JP 2007281415**

(43) Date of publication of application:
**04.08.2010 Bulletin 2010/31**

(73) Proprietor: **NGK Insulators, Ltd.**
**Nagoya-shi, Aichi 467-8530 (JP)**

(72) Inventors:
• **TAKAHASHI, Michio**
**Nagoya-shi**
**Aichi 467-8530 (JP)**

• **SAKUMA, Takeshi**
**Nagoya-shi**
**Aichi 467-8530 (JP)**

(74) Representative: **Paget, Hugh Charles Edward et al**
**Mewburn Ellis LLP**
**33 Gutter Lane**
**London**
**EC2V 8AS (GB)**

(56) References cited:
EP-A1- 1 544 425      JP-A- 7 265 652
JP-A- 2004 345 879    JP-A- 2005 098 134
JP-A- 2006 056 748    JP-A- 2006 255 064
JP-A- 2007 137 721    US-A1- 2005 063 879

**Description**

Technical Field

The present invention relates to a plasma reactor generating plasma between a pair of electrodes and proceeding a reforming reaction by the plasma.

Background Art

In recent years, hydrogen is in the spotlight as clean energy. As a process for obtaining hydrogen, a reforming reaction of hydrocarbon or the like has been known. However, generally, since high temperature of 700 to 900°C is required for the hydrocarbon-reforming reaction, there are problems that the reforming apparatus is large and that great activation energy and long activation time are required for allowing the reaction to proceed. Therefore, there is investigated a technique where a pulse voltage or the like is applied to a pair of electrodes to generate plasma to perform a reforming reaction at low temperature with high efficiency by the use of the plasma.

For example, there have been proposed a method for generating hydrogen, where a mixed gas of alcohol and water vapor is used as the target gas to be reformed to perform a reforming reaction by pulse discharge in the mixed gas, and an apparatus for the method (see, e.g., Patent Document 1). The Patent Document 1 described the use of electrodes having a shape such as a needle shape and a flat plate shape as a pair of electrodes performing pulse discharge.

In addition, there has been proposed a hydrocarbon-reforming apparatus provided with a mixed gas container where hydrocarbon and water vapor are mixed, a pulse power source, and a pair of electrodes present in the mixed gas container and performing a shift reaction to hydrogen by applying a voltage having a specific pulse frequency to a pair of electrodes (see, e.g., Patent Document 2). For example, Patent Document 2 describes the fact that the shift reaction is accelerated by filling a pellet type catalyst in the mixed gas container (so called packed bed method).

Further, there has been proposed a fuel-reforming apparatus provided with a reactor, a pair of electrodes disposed to face each other in the reactor, a voltage-applying apparatus, a pellet type oxide catalyst, and a catalyst-supporting means for supporting the oxide catalyst in the reactor (see, e.g., Patent Document 3).

Patent Document 1:    JP-A-2003-73103
Patent Document 2:    JP-A-2004-345879
Patent Document 3:    JP-A-2006-56748

Disclosure of the Invention

The method described in the Patent Document 1 has the advantage that hydrocarbon can be reformed at relatively low costs under the mild conditions of low temperature (80 to 120°C) and ordinary pressure in comparison with the conventional methods. However, the methods described in the Patent Document 1 has a problem of a narrow reaction region because a needle-shaped electrode and the like are used as the pair of electrodes, and thereby the hydrogen generation efficiency cannot be raised unless a reactor having a small internal diameter is used. Therefore, there arise problems that the target gas treatment amount cannot be increased and that a large amount of hydrogen cannot be generated. In addition, there arises a problem that durability of the electrodes is insufficient because the needle-shaped electrode and the like have large thermal deterioration upon discharge.

On the other hand, since the apparatus described in the Patent Document 2 or 3 employs a catalyst in addition to the pulse discharge, it has a characteristic of hardly deteriorating hydrogen generation rate even when an internal diameter of the reactor is made large. Therefore, it can be expected that hydrogen-containing reformed gas is generated from the target gas to be reformed under relatively low temperature conditions. However, since the apparatus described in the Patent Document 2 or 3 employs a pellet type catalyst as the catalyst, the contact among the catalysts is a point contact, which is inferior in heat transfer among the catalysts. Therefore, there is a problem of low activation ability of the reforming reaction. In addition, in the case of employing the packed bed method, since the target gas to be reformed passes through a gap among the pellet type catalysts filled in the reformer, it cannot be used only in a range of a space velocity of several thousands $h^{-1}$ or less of the target gas to be treated. Therefore, because the target gas treatment speed cannot be enhanced, there is a problem of impossible generation of a large amount of hydrogen.

The present invention has been made in view of the aforementioned problems and provides a plasma reactor having excellent activation ability and reaction efficiency of the reforming reaction and being capable of generating a large amount of hydrogen with high durability of the electrodes besides the fact that the hydrogen generation efficiency hardly deteriorates even when the internal diameter of the reactor is increased.

As a result of the inventors' earnest study for solving the aforementioned problems of the prior art, they found out that the aforementioned problems can be solved by the use of a honeycomb-shaped electrode (honeycomb electrode, composed of conductive ceramic as one of the pair of electrodes constituting the plasma reactor, which lead to the completion of the present invention. Specifically, according to the present invention, there are provided the following plasma reactors.

[1] A plasma reactor comprising: a reformer reactor having a feed port for target gas to be reformed and a discharge port for reformed gas, a pair of electrodes disposed to face each other in an internal space of the reformer reactor, and a pulse power source for applying a pulse voltage to the electrodes; wherein one of the electrodes is a linear electrode, and the other electrode is a honeycomb electrode which is composed of a conductive ceramic and has a plurality of cells functioning as gas flow passages and separated and formed by partition walls.

[2] The plasma reactor according to the above [1], wherein the linear electrode is a needle-shaped electrode or a stick-shaped electrode.

[3] The plasma reactor according to the above [1] or [2], wherein at least a pair of linear electrodes is provided being disposed to face each other sandwiching the honeycomb electrode therebetween.

[4] The plasma reactor according to any one of the above [1] to [3], wherein the reactor is further provided with a catalyst for accelerating reforming reaction of the target gas and wherein the catalyst is loaded on the partition walls of the honeycomb electrode.

[5] The plasma reactor according to any one of the above [1] to [4], wherein the catalyst is composed of a substance containing at least one element selected from the group consisting of noble metal, aluminum, nickel, zirconium, titanium, cerium, cobalt, manganese, zinc, copper, tin, iron, niobium, magnesium, lanthanum, samarium, bismuth, and barium.

[6] The plasma reactor according to any one of the above [1] to [4], wherein the catalyst is composed of a substance containing at least one element selected from the group consisting of platinum, rhodium, palladium, ruthenium, indium, silver, and gold.

[7] The plasma reactor according to any one of the above [1] to [6], wherein the honeycomb electrode is composed of conductive ceramic containing silicon carbide.

[8] The plasma reactor according to any one of the above [1] to [7], wherein the honeycomb electrode has a cell density of 4 to 186 cells/cm$^2$.

[9] The plasma reactor according to any one of the above [1] to [8], wherein the honeycomb electrode is disposed to have a distance of 1 to 30 mm from the linear electrode.

[10] The plasma reactor according to any one of the above [1] to [9], wherein the honeycomb electrode has a thermal conductivity of 10 to 300 W/mK.

[11] The plasma reactor according to any one of the above [1] to [10], wherein the pulse power source is a high voltage pulse power source using an electrostatic induction thyristor as a switching element.

A plasma reactor of the present invention is excellent in activation ability and reaction efficiency of the reforming reaction, can generate a large amount of hydrogen, and has high electrode durability besides the fact that the hydrogen generation efficiency hardly deteriorates even when the internal diameter of the reactor is increased.

Brief Description of the Drawings

[Fig. 1] Fig. 1 is a schematic view showing an embodiment of a plasma reactor of the present invention.
[Fig. 2] Fig. 2 is a schematic view showing another embodiment of a plasma reactor of the present invention.
[Fig. 3] Fig. 3 is a schematic view showing an embodiment of a plasma reactor of Comparative Example 3.

Description of Reference Numerals

1A, 1B, 100: plasma reactor, 2: target gas to be reformed, 4: feed port, 6: reformed gas, 8: discharge port, 10: reformer reactor, 12: electrode, 12a, 12c: linear electrode, 12b: honeycomb electrode, 12d: mesh electrode, 14: pulse power source, 16: cell, 20: honeycomb structure, 22: mesh-shaped body

Best Mode for Carrying out the Invention

Hereinbelow, the best mode for carrying out a plasma reactor of the present invention will be described. However, the present invention widely include plasma reactors provided with the invention-specifying elements and is not limited to the following embodiment.

[1] Characteristics of plasma reactor of the present invention:

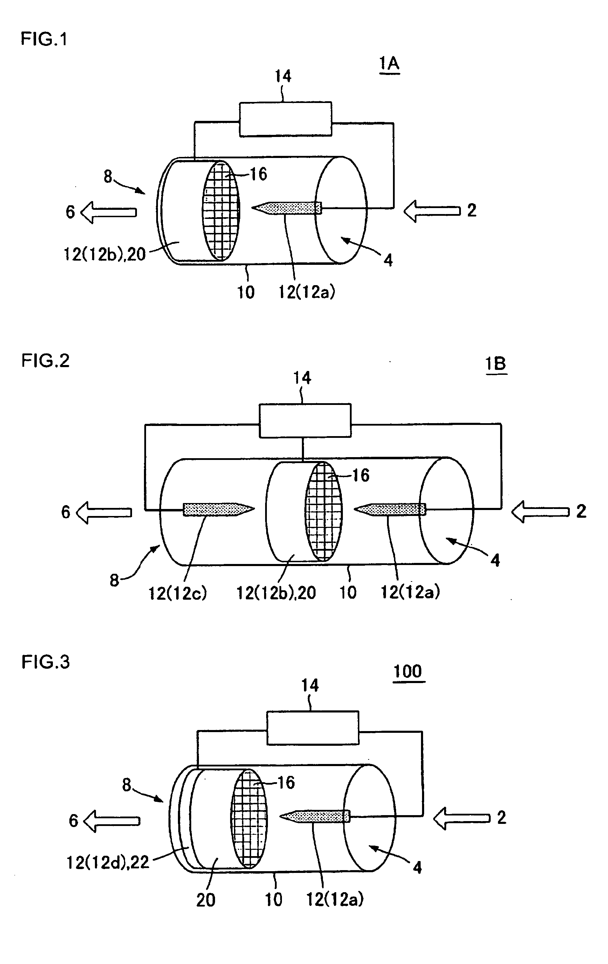

As the plasma reactor 1A shown in Fig. 1, a plasma reactor of the present invention is provided with a reformer reactor 10 having a feed port 4 for target gas 2 to be reformed and a discharge port 8 for reformed gas 6, a pair of electrodes 12 disposed to face each other in an internal space of the reformer reactor 10, and a pulse power source 14 for applying a pulse voltage to the electrodes 12 and **characterized in that** one of the electrodes 12 is a linear electrode 12a, and the other electrode 12 is a honeycomb electrode 12b which is composed of a conductive ceramic and has a plurality of cells 16 functioning as gas flow passages and separated and formed by partition walls.

Thus, by employing a honeycomb electrode as one of the pair of electrodes, thermal deterioration upon discharge can be reduced and electrode durability can be improved in comparison with a needle-shaped electrode and a flat plate-shaped electrode. Therefore, it can suitably be used also for an in-car fuel reformer or the like where stable long-period supply of reformed gas is required.

In addition, by making one of the pair of electrodes a honeycomb electrode, a pulse voltage is applied to the whole honeycomb electrode to increase discharge region. This can spread the reaction region and improve activation ability and reaction efficiency of the reforming reaction in comparison with a needle-shaped electrode and a flat plate-shaped electrode and eventually improve hydrogen generation efficiency even when the internal diameter of the reactor is increased.

Further, in a plasma reactor of the present invention, it is possible to load a catalyst on the partition walls of the honeycomb electrode. In this case, the target gas to be reformed easily passes through the reactor in comparison with the case where a pellet type catalyst is filled by the packed bed method. This enables to treat the target gas at a target gas space velocity of several tens of thousands to several hundreds of thousands $h^{-1}$ (that is, at high treatment speed).

In addition, in the case of loading a catalyst on the partition walls of the honeycomb electrode, heat transfer among the catalyst becomes quick, and activation ability of the reforming reaction is improved in comparison with the case where a pellet shaped catalyst is filled by the packed bed method. Therefore, the treatment speed and treatment amount of the target gas can be improved to a large extent, and a large amount of hydrogen can be generated. Further, by the use of quick heat transfer among the catalyst, it can be used for, for example, the early stage activation of the catalyst (use for cold start) upon the engine start of internal combustion engines.

[2] Constituent member of plasma reactor:

The constituent members of a plasma reactor of the present invention are a honeycomb electrode, a linear electrode, a catalyst, a reformer reactor, a pulse power source, and the like.

[2-1] Honeycomb electrode:

In a plasma reactor of the present invention, a pair of electrodes is disposed so as to face each other in the internal space of the reformer reactor, and one of the electrodes is a honeycomb electrode. The "honeycomb electrode" referred to in the present specification means a honeycomb-structured electrode composed of a conductive ceramic and having a plurality of cells functioning as gas flow passages and separated and formed by partition walls.

The structure of the honeycomb electrode may be a so-called honeycomb structure having a plurality of cells functioning as gas flow passages and separated and formed by partition walls, and the other part has no particular limitation. For example, for the cell shape, a desired shape may be selected from a circle, an ellipse, a triangle, a quadrangle, a hexagon, other polygons, and the like.

In the present invention, there is no particular limitation on the cell density (i.e., number of cells per unit cross-sectional area) of the honeycomb electrode, and it may suitably be designed in accordance with the purpose. However, it is preferably within the range from 6 to 2000 cells/sq.in. (1.0 to 320 cells/cm$^2$). When the cell density is below 6 cells/sq.in., strength of the partition walls, and eventually strength of the honeycomb electrode itself and effective GSA (geometric surface area) may become insufficient. On the other hand, when the cell density is above 2000 cells/sq. in. , pressure loss upon the flow of the target gas to be reformed may increase.

In particular, in the case of using it for hydrogen generation by reforming of hydrocarbon, the cell density of the honeycomb electrode is 25 to 1163 cells/sq. in. (4 to 186 cells/cm$^2$). When the cell density is 4 cells/cm$^2$, the plasma generation region causing creeping discharge on the surfaces of the partition walls of each of the cells becomes sparse, and therefore the reforming efficiency of the target gas to be reformed may be deteriorated. On the other hands, when it is above 186 cells/cm$^2$, the back pressure resistance of the honeycomb structure may increase.

There is no particular limitation on the partition wall thickness (wall thickness), and it may suitably be designed in accordance with the purpose. For example, in the case of using the honeycomb electrode for hydrogen generation by reforming of hydrocarbon, the wall thickness is preferably 50 $\mu$m to 2 mm, more preferably 60 to 500 $\mu$m. When the

wall thickness is below 50 μm, the mechanical strength is deteriorated, and the electrode may be damaged by shock or thermal stress due to temperature change. On the other hand, when it is above 2 mm, the proportion of the cell capacity in the honeycomb electrode becomes low, and a defect of excessive pressure loss upon the passage of the target gas may be caused.

In addition, the length (length in a gas flow direction) of the honeycomb electrode is preferably 5 to 40 mm, more preferably 10 to 30 mm. When it is shorter than 5 mm, the plasma generation region causing creeping discharge is too narrow, and there is a case that most of the hydrocarbon contained in the target gas to be reformed flows out from the reformer reactor without being reformed. On the other hand, when it is longer than 40 mm, besides the necessity of a large amount of power for generating plasma, the plasma reactor grows in size as a whole, and there is a possibility of being inappropriate for the use as an in-car fuel reformer required to be small and light.

As the "conductive ceramic" constituting the honeycomb electrode, silicon carbide is preferable. However, it is not always necessary that the whole electrode is constituted of silicon carbide as long as the honeycomb electrode has conductivity. That is, in a plasma reactor of the present invention, it is preferable that the honeycomb electrode is composed of a conductive ceramic containing silicon carbide. In this case, the silicon carbide content in the honeycomb electrode is preferably 50 mass% or more, further preferably 60 mass% or more because of suppressing deterioration in conductivity.

In addition, the honeycomb electrode is preferably a porous body having a porosity of 30 to 60%, more preferably a porous body having a porosity of 40 to 50%. When the porosity is below 30%, the effect of micro discharge in gaps among the ceramic particles may decrease. On the other hand, when it is above 60%, a defect such as insufficient strength of the partition walls may be caused.

The honeycomb electrode has the electric resistance of preferably 2Ω or less, more preferably 0.3Ω or less upon applying a voltage of 3.5V at 180°C from the viewpoint of securing the conductivity. To obtain such an electric resistance, silicon carbide is used as the conductive ceramic, which is preferably subjected to a treatment of mixing metal silicon thereto, a treatment of making complex compound of silicon carbide and metal silicon, or the like.

Incidentally, the "electric resistance" referred to here means a value measured (at 180°C) with a voltage terminal distance of 2.3 cm by a constant-current four terminal method by a direct current source by cutting out a rectangular parallelepiped having a length of 3.3 cm and a cross-sectional area of 1.1 cm$^2$ (cross-sectional area of a cross section perpendicular to the gas flow direction) along the gas flow direction (cell formation direction) of the honeycomb electrode.

The honeycomb electrode has a thermal conductivity of preferably 5 to 300 W/mK, further preferably 10 to 200 W/mK, particularly preferably 20 to 100 mK. When the thermal conductivity is below 5 W/mK, activation of the loaded catalyst may take time. On the other hand, when the thermal conductivity is above 300 W/mK, heat release to the exterior increases, and activation of the loaded catalyst may become insufficient. Examples of the conductive ceramic having such a thermal conductivity include silicon carbide, silicon nitride, and aluminum nitride.

The honeycomb electrode is disposed to have a distance from the linear electrode of preferably 1 to 30 mm, further preferably 5 to 10 mm. When the distance between the electrodes is below 1 mm, electric field concentration is easily caused, and short circuit may easily be caused with beginning at the electric field concentration. In addition, through plasma discharge is caused between the electrodes, the hydrogen generation amount in accordance with the reforming reaction of hydrocarbon may decrease. On the other hand, when it is above 30 mm, the plasma discharge hardly becomes stable, and the plasma generation efficiency may deteriorate.

Incidentally, in the present invention, only disposing a honeycomb structure of conductive ceramic in the internal space of the reformer reactor is not sufficient, and it is necessary to dispose a honeycomb structure capable of functioning as an electrode. For example, the plasma reactor 100 shown in Fig. 3 is provided with a stainless-steel mesh-shaped body 22 and a honeycomb structure 20 composed of a conductive ceramic disposed so as to abut against an end face of the mesh-shaped body 22. In the plasma reactor 100, since a pulse voltage is applied to the mesh-shaped body 22 connected to the pulse power source 14, the mesh-shaped body 22 functions as the electrode 12 (mesh electrode 12d). On the other hand, the honeycomb structure 20 functions just as a conductive body and does not functions as an electrode. That is, since the plasma reactor 100 is not provided with a honeycomb electrode though a honeycomb structure 20 is disposed in the internal space of the reformer reactor 10, it is not included in the scope of the present invention.

[2-2] Linear electrode:

In a plasma reactor of the present invention, the electrode other than the honeycomb electrode in a pair of electrodes is a linear electrode. The "linear electrode" in the present specification means a stick-shaped electrode, and it is, for example, a needle-shaped electrode and the like besides a stick-shaped electrode. The "stick shape" means a linear cylinder-shape having a uniform outer diameter in the longitudinal direction, and the "needle shape" means a linear shape with a pointed top. However, the shape of the linear electrode is not limited to a linear shape as in the stick-shaped electrode and the needle-shaped electrode and may be a bent shape including, for example, an L shape. The number of the linear electrode disposed is at least one, and a plurality of the linear electrodes may be disposed.

The length of the linear electrode is preferably 3 to 50 mm, further preferably 5 to 30 mm, for downsizing the plasma reactor. When the length is below 3 mm, handling of the linear electrode becomes unstable upon manufacturing a plasma reactor, and fixation of the linear electrode may become difficult. On the other hand, when it is above 50 mm, the linear electrode may easily be bent due to the contact with the flowing target gas to be reformed.

In addition, the outer diameter of the linear electrode is preferably 0.1 to 5 mm, further preferably 0.5 to 3 mm. When the outer diameter is below 0.1 mm, the linear electrode may easily be bent due to the contact with the flowing target gas to be reformed, and plasma discharge may become unstable. On the other hand, when it is above 5 mm, plasma discharge control may become difficult.

The linear electrode is preferably constituted of a highly conductive material, specifically, metal, alloy, conductive ceramic, or the like from the viewpoint of securing conductivity. Examples of the highly conductive metal include stainless steel, nickel, copper, aluminum, and iron; examples of the highly conductive alloy include aluminum-copper alloy, titanium alloy, and Inconel (trade name); examples of the conductive ceramic include silicon carbide; and examples of the other materials include carbon.

In the present invention, the number of the linear electrode is not limited as long as there is provided a linear electrode to form a pair with the honeycomb electrode. For example, as a preferable embodiment, as the plasma reactor 1B shown in Fig. 2, at least a pair of linear electrodes 12a and 12c is provided being disposed so as to face each other sandwiching the honeycomb electrode 12b therebetween. In such an embodiment, since the reforming reaction securely proceeds due to the increase in time that the target gas to be reformed passes through the plasma space in comparison with a plasma reactor provided with one linear electrode as the plasma reactor 1A shown in Fig. 1, the unreacted hydrocarbon can be reduced, and generation of by-products can be inhibited. Therefore, in the case of using it for the reforming reaction of hydrocarbon, the effects of further raising the hydrogen yield and inhibiting generation of by-products are exhibited.

[2-3] Catalyst:

A plasma reactor of the present invention is preferably provided with a catalyst for accelerating the reforming reaction of the target gas to be reformed. The catalyst is not particularly limited as long as it is a substance having the aforementioned catalysis. The substance contains at least one element selected from the group consisting of noble metal (platinum, rhodium, palladium, ruthenium, indium, silver, gold, and the like), aluminum, nickel, zirconium, titanium, cerium, cobalt, manganese, zinc, copper, tin, iron, niobium, magnesium, lanthanum, samarium, bismuth, and barium. The substance containing the aforementioned element includes various forms such as simple metals, metal oxides, and other compounds (chlorides, sulfates, etc.). These may be used alone or as a combination of two or more kinds.

The catalyst is preferably loaded on the partition walls of the honeycomb electrode. By loading a catalyst inside the cells of the honeycomb electrode where the target gas to be reformed passes, improvement in the reaction efficiency can be planned. In addition, since the cells functioning as gas flow passages are secured unlike the packed bed method where a pellet type catalyst is filled, passages for the target gas to be formed is hardly blocked. In addition, since a catalytic component is loaded on the honeycomb electrode functioning as a carrier, good heat transfer among the catalyst can be obtained.

As the amount of catalyst loaded is preferably 0.05 to 70 g/L, further preferably 0.1 to 40 g/L. When the load amount is below 0.05 g/L, exhibition of the catalysis may be difficult. On the other hand, when it is above 70 g/L, the production costs of the plasma reactor may increase.

It is preferable that the catalyst is loaded on the partition walls of the honeycomb electrode in the state of a catalyst-coated fine particles, where the catalyst is loaded on the carrier fine particles. Such a form has the advantage of raising the reaction efficiency of the target gas to be reformed with respect to the catalyst. As the carrier fine particles, for example, a ceramic powder can be used. Though there is no particular limitation on the kind of the ceramic, there can suitably be used a powder of, for example, a metal oxide, in particular, silica, alumina, titania, zirconia, ceria, zeolite, mordenite, alumina silisate like ceramic, metal silicate, and cordierite. These ceramics may be used alone or as a combination of two or more kinds. Loading can be performed by coating such catalyst-coated fine particles on the partition walls of the honeycomb electrode.

These powders have an average particle diameter of preferably 0.01 to 50 $\mu$m, further preferably 0.1 to 20 $\mu$m. When the average particle diameter is below 0.01 $\mu$m, loading of the catalyst on the surfaces of the carrier fine particles may be difficult. On the other hand, when it is above 50 $\mu$m, the catalyst-coated fine particles may easily be detached from the honeycomb electrode.

The mass ratio of the catalyst to the carrier fine particles is preferably 0.1 to 20 mass%, more preferably 1 to 10 mass%. When the mass ratio of the catalyst is below 0.1 mass%, progress of the reforming reaction may become hard. On the other hand, when it is above 20 mass%, uniform loading on the carrier fine particles becomes hard since the catalyst is not dispersed uniformly to easily aggregate. Therefore, even if the catalyst at an amount exceeding 20 mass% is added, the catalyst addition effect worth the amount cannot be obtained, and acceleration of the reforming reaction may not be obtained.

The catalyst-coated fine particles can be obtained by impregnating a ceramic powder to serve as carrier fine particles with an aqueous solution containing a catalytic component, followed by drying and firing. To the catalyst-coated fine particles are added a dispersion medium (water or the like) and other additives to prepare coating liquid (slurry), and the slurry is coated on the partition walls of the honeycomb electrode to be able to load the catalyst on the partition walls of the honeycomb electrode.

[2-4] Reformer reactor:

In the present invention, the reformer reactor is a tubular structure where the feed port for target gas to be reformed and a discharge port for reformed gas are formed. Though it has to have a hollow shape from the necessity of passing the gas, there is no other limitation on the shape, and the reactor having, for example, a cylindrical shape, a prismatic cylindrical shape, or the like, can be used. There is no particular limitation on the maximum inner diameter of the reformer reactor, and the size may suitably be determined depending on the use of the plasma reactor.

In addition, though there is no particular limitation on the material constituting the reformer reactor, the container portion is preferably constituted of a metal having good workability (e.g., stainless steel). In addition, in order to inhibit short circuiting, the portion where the electrodes are disposed and the like in the container are preferably constituted of an insulating material.

As the insulating material, ceramic can suitably be used. Preferable examples of the ceramic include alumina, zirconia, silicon nitride, aluminum nitride, sialon, mullite, silica, and cordierite. These ceramics may be used alone or as a combination of two or more kinds.

[2-5] Pulse power source:

The pulse power source is a power source for applying a pulse voltage to a pair of electrodes. Any power source capable of periodically applying a voltage can be used. Above all, it is preferable that the power source can supply (a) a pulse wave shape having a peak voltage of 1 kV or more and a pulse number per second of 1 or more, (b) an alternating-current voltage wave shape having a peak voltage of 1 kV or more and a frequency of 1 or more, (c) a direct current wave shape having a voltage of 1 kV or more, or (d) a voltage wave shape obtained by superimposing two or more kinds of these. The power source has a peak voltage of preferably 1 to 20 kV, further preferably 5 to 10 kV.

An example of such a power source is a high voltage pulse power source using an electrostatic induction thyristor (SI thyristor) or a MOS-FET as the switching element. Of these, it is preferable to use a high voltage pulse power source (e.g., one produced by NGK Insulators, Ltd.) using the SI thyristor as the switching element. Incidentally, the "MOS-FET" means one where the gate electrode has a three-layer structure composed of a metal, a semiconductor oxide, and a semiconductor among electric field effect transistors (FET).

[3] Manufacturing method:

A plasma reactor of the present invention can be manufactured, for example, as follows. A honeycomb electrode is obtained by a conventionally known extrusion forming method. Specifically, after kneaded clay containing a ceramic powder is extruded to have a desired shape, it is dried and fired to obtain a honeycomb electrode having a honeycomb shape. At this time, regarding the honeycomb electrode, silicon carbide or the like of a conductive material is used as the raw material ceramic. Regarding the reformer reactor, a tubular (cylindrical) reformer reactor may be obtained by a conventionally known metal-working method. At this time, regarding the reformer reactor, it is preferable to use a metal material such as stainless steel which can easily be worked.

A catalyst is loaded on the partition walls of the honeycomb electrode. After, the ceramic powder to serve as carrier fine particles is impregnated with an aqueous solution containing a catalyst component, it is dried and fired to obtain catalyst-coated fine particles. To the catalyst-coated fine particles are added a dispersion medium (water or the like) and other additives to prepare coating liquid (slurry), which is then coated on the partition walls of the honeycomb electrode, followed by drying and firing to load a catalyst on the partition walls of the honeycomb electrode.

The honeycomb electrode obtained above is disposed in the internal space of the reformer reactor by means of an insulator composed of alumina or the like. At this time, the honeycomb electrode is kept apart from the linear electrode at a predetermined interval so that they face each other. Then, the honeycomb electrode and the linear electrode are electrically connected with the pulse power source to constitute a plasma reactor.

[4] Usage:

A plasma reactor of the present invention can suitably be used for a reforming reaction, in particular, the reforming reaction to obtain a hydrogen-containing reformed gas with a hydrocarbon based compound or alcohol as the target gas to be reformed.

Examples of the "hydrocarbon based compound" include light hydrocarbons such as methane, propane, butane, heptane, and hexane; and petroleum hydrocarbons such as isooctane, gasoline, kerosene oil, and naphtha. Examples of the "alcohol" include methanol, ethanol, 1-propanol, 2-propanol, and 1-butanol. These target gases to be reformed may be used alone or as a combination of two or more kinds.

There is no particular limitation on the reforming method. For example, there may be employed any one of partial reforming using oxygen, steam reforming using water, and autothermal reforming using oxygen and water.

The reforming reaction can be performed by using a plasma reactor of the present invention, introducing a target gas to be reformed into the internal space of the reformer reactor, and applying one of (a) a pulse wave shape having a peak voltage of 1 kV or more and a pulse number per second of 1 or more, (b) an alternating-current voltage wave shape having a peak voltage of 1 kV or more and a frequency of 1 or more, (c) a direct current wave shape having a voltage of 1 kV or more, and (d) a voltage wave shape obtained by superimposing two or more kinds of these to the electrode from the pulse power source.

Example

A plasma reactor of the present invention will be described more specifically with referring to the plasma reactor 1A shown in Fig. 1 and the plasma reactor 1B shown in Fig. 2 as the examples. However, a plasma reactor of the present invention includes all the plasma reactors provided with the elements specifying the present invention and is not limited to the following Examples.

[Manufacture of plasma reactor]

In the first place, a plasma reactor is manufactured as follows.

(Example 1)

A plasma reactor 1A as shown in Fig. 1 was manufactured. As the reformer reactor 10, a cylindrical body composed of stainless steel and having an inner diameter of 30 mm, a thickness of 5 mm, and a length of 70 mm was used for the container portion. Inside the stainless steel cylindrical body was disposed alumina as an insulator, and the honeycomb electrode 12b and the linear electrode 12a were arranged on the insulator.

As the honeycomb electrode 12b, there was used a honeycomb structure 20 composed of silicon carbide (content of 75 mass%) and having a plurality of cells 16 functioning as gas flow passages and separated and formed by partition walls. As the honeycomb structure 20, there was cut out and used a silicon carbide diesel particulate filter (trade name: SiC-DPF, produced by NGK Insulators, Ltd.) for trapping particulate matter contained in an engine exhaust gas or the like.

More specifically, it had a circular columnar shape having a square cell shape, a cell density of 46 cells/cm$^2$, an outer diameter of 30 mm, and a length (length in the gas flow direction) of 20 mm. In addition, a rectangular parallelepiped having a length of 2.5 cm and a cross-sectional area (cross-sectional area of a cross section perpendicular to the gas flow direction) of 12.3 cm$^2$ was cut out from the aforementioned SiC-DPF, and the electric resistance measured (at 180°C) by a constant current four terminal method by a direct current source with the distance between voltage terminals of 2.5 cm was 0.2Ω. Further, the thermal conductivity was 100 W/mK.

As the linear electrode 12a, there was used a stick-shaped body composed of nickel base alloy (trade name: Inconel 600, produced by The Nilaco Corporation) and having a length of 10 mm and an outer diameter of 0.5 mm. The honeycomb electrode 12b was disposed so as to have a distance of 5 mm from the linear electrode 12a. Incidentally, in the plasma reactor 1A, the linear electrode 12a served as a positive electrode.

As the pulse power source 14, a high voltage pulse power source (produced by NGK Insulators, Ltd.) having a SI thyristor as a switching element. The pulse power source 14 was electrically connected with the linear electrode 12a (positive electrode) and the honeycomb electrode 12b (negative electrode).

(Example 2)

A plasma reactor was manufactured in the same manner as in Example 1 except that a catalyst was loaded on the partition walls of the honeycomb electrode. The catalyst was loaded by the following method.

After impregnating an alumina powder (specific surface area of 107 $m^2$/g) serving as carrier fine particles with a (rhodium nitrate ($Rh(NO_3)_3$) aqueous solution containing catalyst component rhodium in advance, it was dried at 120°C and then fired at 550°C for 3 hours in the atmosphere to obtain catalyst-coated fine particles. The mass ratio of rhodium to alumina was 0.5 mass%.

To the catalyst-coated fine particles were added a dispersion medium (water) and alumina sol, and its pH was adjusted to 4 by a nitric acid aqueous solution to obtain coating liquid (slurry). After the partition walls were coated by immersing the honeycomb electrode in the slurry, it was dried at 120°C and then fired at 550°C for 1 hour in a nitrogen atmosphere to load a catalyst on the partition walls of the honeycomb electrode. The amount of rhodium loaded on the honeycomb electrode was 0.5 (g/L).

(Example 3)

A plasma reactor 1B as shown in Fig. 2 was manufactured. The plasma reactor 1b was manufactured in the same manner as in Example 2 except that a pair of linear electrodes 12a, 12c were disposed so as to face each other sandwiching the honeycomb electrode 12b therebetween and that a circular cylindrical body composed of stainless steel and having an inner diameter of 30 mm, a thickness of 5 mm, and a length of 120 mm was used for the container portion. The linear electrodes 12a, 12c were disposed to have a distance of 5 mm from the honeycomb electrode 12b. Incidentally, also in this plasma reactor 1B, the linear electrodes 12a, 12c served as positive electrodes.

(Example 4)

A plasma reactor was manufactured in the same manner as in Example 1 except that a pulse power source having MOS-FET as the switching element was used as the pulse power source. As the MOS-FET, a commercially available pressure resistant MOS-FET (produced by Toshiba Corporation) was used.

(Comparative Example 1)

A plasma reactor was manufactured in the same manner as in Example 1 except that a needle-shaped electrode which was the same as the positive electrode was disposed as the negative electrode in place of the honeycomb electrode constituting the negative electrode. The distance between the electrodes was 5 mm.

(Comparative Example 2)

A plasma reactor was manufactured in the same manner as in Comparative Example 1 except that a pellet type catalyst was filled by a packed bed method. The pellet type catalyst was filled in the following method.
In the first place, a pellet composed of barium titanate ($BaTiO_3$), having an outer diameter of 2 mm and serving as a carrier was immersed in the coating liquid (slurry) used in Example 2 to coat the pellet. Then, it was dried and fired in the same conditions as in Example 2 to load the catalyst on the surface of the pellet.
The catalyst-loaded pellet was filled on the negative electrode side in such a manner that the rhodium amount became 0.5 (g/L), which was the same as Example 2. At that time, the catalyst-loaded pellet was filled in such a manner that the needle-shaped electrode on the negative electrode side was exposed to the surface of the pellet by 5 mm.

(Comparative Example 3)

The plasma reactor 100 shown in Fig. 3 was manufactured. The plasma reactor 100 shown in Fig. 3 was manufactured in the same manner as in Example 1 except that a circular cylindrical body composed of stainless steel and having an inner diameter of 30 mm, a thickness of 5 mm, and a length of 90 mm was used for the container portion as the reactor reformer 10 and that a stainless steel mesh-shaped body 22 and a honeycomb structure 20 disposed so as to abut against the end face of the mesh-shaped body 22 and composed of conductive ceramic were used in place of the honeycomb electrode. The mesh-shaped body 22 functioned as an electrode (mesh electrode 12d) forming a pair with the linear electrode 12a.
As the honeycomb structure 20, the honeycomb structure used as the honeycomb electrode in Example 1 was used as it was. As the mesh-shaped body 22, there was used a mesh-shaped body composed of stainless steel and having a circular shape having a diameter of 30 mm and a thickness of 5 mm with a mesh size of 5 mm square.

[Plasma generation test]

Plasma was generated by the use of the plasma reactors of Examples 1 to 4, and the generation state was evaluated. Specifically, the steam reforming reaction of isooctane (i-$V_8H_{18}$) was performed by the use of the aforementioned plasma reactors, and the generation state of plasma at that time was evaluated. The results are shown in Table 1.
[Table 1]

| Plasma reactor | Example 1 | | Example 4 | | | |
|---|---|---|---|---|---|---|
| High voltage pulse power source | SI thyristor | | MOS-FET | | | |
| Temperature in reformer reactor (°C) | Ordinary temperature (25°C) | 600 °C | Ordinary temperature (25°C) | | 600 °C | |
| Input power (W) | ≤50 | ≤50 | ≤30 | >30 | ≤15 | >15 |
| Plasma form | Streamer discharge / arc discharge | | | Only arc discharge | | No plasma generated |
| Plasma irradiation angle | ≥10° | | | 0 to 5° | | - |
| Plasma irradiation range | Wide | | | Narrow (linear) | | - |

As the target gas to be reformed, a gas containing isooctane of 2000 ppm, water of 16000 ppm, and nitrogen gas as the rest was used. The target gas to be reformed was prepared by injecting water previously gasified by the use of an evaporator and a predetermined amount of isooctane (liquid) in a nitrogen gas heated at 250°C. At that time, the isooctane was injected by the use of a high pressure micro feeder (trade name: JP-H Type, produced by Furue Science Co., LTD).

The aforementioned target gas to be reformed was supplied to the plasma reactor to perform a steam reforming reaction. The plasma reactor was disposed in an electric furnace, temperature of the inside of the reformer reactor was made ordinary temperature (25°C) or 600°C, and a pulse voltage was applied to a pair of electrodes from the pulse power source under the conditions of a cycle of 3 kHz and a peak voltage of 3 kV. At that time, the input power was as shown in Table 1. The space velocity (SV) of the target gas to be reformed inside the reformer reactor was adjusted to be 200,000 h$^{-1}$ in all of the cases.

(Evaluation)

As shown in Table 1, in the case of using a plasma reactor of Example 1, regardless of the internal temperature of the reformer reactor and the input power, there was formed stable plasma where streamer discharge (low temperature plasma) and arc discharge (heat plasma) coexisted. In addition, the plasma had a discharge irradiation angle of 10° or more, which spread the irradiation range.

Also, in the case of using the plasma reactor of Example 4, stable plasma where streamer discharge (low temperature plasma) and arc discharge (heat plasma) coexisted was formed under the conditions of ordinary temperature and 30W or less. However, the range of input power capable of generating stable plasma was narrow in comparison with the plasma reactor of Example 1. Specifically, under the conditions of ordinary temperature and above 30W and the conditions of 600°C and 15W, generated plasma hardly shifted to arc discharge (heat plasma), and the plasma was unstable. In addition, the generated plasma was linear and had a narrow irradiation range, and a damage of the electrode parts due to heat deterioration was serious. Incidentally, in the plasma reactor of Example 4, plasma was not generated under the conditions of 600°C and above 15W.

From the aforementioned results, it was confirmed that, in a plasma reactor of the present invention, a high voltage pulse power source employing a SI thyristor or a MOS-FET as the switching element can be used as the pulse power source and that the use of a high voltage pulse power source employing a SI thyristor as the switching element is more preferable.

[Hydrocarbon-reforming test]

A hydrocarbon-reforming test was performed by the use of plasma reactors of Examples and Comparative Examples. Specifically, a steam reforming reaction of isooctane (i-$C_8H_{18}$) was performed.

As the target gas to be reformed, a gas containing isooctane of 2000 ppm, water of 16000 ppm, and nitrogen gas as the rest was used. The target gas to be reformed was prepared by injecting water previously gasified by the use of an evaporator and a predetermined amount of isooctane (liquid) in a nitrogen gas heated at 250°C. At that time, the isooctane was injected by the use of a high pressure micro feeder (trade name: JP-H Type, produced by Furue Science Co., LTD).

The aforementioned target gas to be reformed was supplied to the plasma reactor to perform a steam reforming reaction. The plasma reactor was disposed in an electric furnace, temperature of the inside of the reformer reactor was made 250°C, and a pulse voltage was applied to a pair of electrodes from the pulse power source under the conditions of a cycle of 8 kHz and a peak voltage of 3 kV. The space velocity (SV) of the target gas to be reformed inside the reformer reactor was adjusted to be 200,000 h$^{-1}$ in all of the cases.

Regarding the reformed gas obtained by the reforming reaction, the hydrogen amount was measured. The reforming reaction was measured by the use of a gas chromatography (trade name: GC3200, produced by GL Sciences, Inc.) provided with a TCD (thermal conductivity detector). At this time, there were used a mixed gas of hydrogen having a known concentration, methane ($CH_4$), and acetylene ($C_2H_2$) as the standard gas and argon gas as the carrier gas. Since the area of peak corresponding to hydrogen increases in proportion to the concentration in the gas chromatography, the hydrogen amount in the reformed gas can be measured by comparing with the area of the peak corresponding to hydrogen having a known concentration in advance.

The hydrogen yield was calculated by the following formula (1). The evaluations were given as "excellent" for a hydrogen yield of 60 mass% or more, "good" for a hydrogen yield of 50 mass% or more and below 60 mass%, "bad" for a hydrogen yield of 40 mass% or more and below 50 mass%, and "very bad" for a hydrogen yield of below 40 mass%. The results are shown in Table 2.

$$Hydrogen\ yield\ (mass\%) = isooctane\ amount\ calculated$$
$$out\ from\ hydrogen\ amount\ in\ reformed\ gas\ /\ isooctane\ amount$$
$$in\ target\ gas\ to\ be\ reformed \times 100 \quad ...\ (1)$$

For the measurements of the amounts of methane and acetylene as by-products, the concentrations were calculated out from the area of each peak corresponding to each by-product obtained by a gas chromatography by the use of the mixed gas of hydrogen having a known concentration, methane ($CH_4$), and acetylene ($C_2H_2$) as the standard gas in the same manner as in the measurement of the hydrogen amount. At this time, helium gas was used as the carrier gas. The by-product yields were calculated out by the following formula (2). The results are shown in Table 2.

$$By-product\ yield\ (mass\%) = (peak\ area\ corresponding$$
$$to\ each\ by-product\ collected\ from\ reformed\ gas\ /\ peak\ area$$
$$of\ each\ by-product\ in\ standard\ gas) \times concentration\ of\ each$$
$$by-product\ in\ standard\ gas \quad ...\ (2)$$

[Table 2]

| Plasma reactor | Example 1 | Example 2 | Example 3 | Comp. Ex. 1 | Comp. Ex. 2 | Comp. Ex. 3 |
|---|---|---|---|---|---|---|
| Electrode (positive) | Needle shape (one) | Needle shape (one) | Needle shape (two facing each other) | Needle shape (one) | Needle shape (one) | Needle shape (one) |
| Electrode (negative) | Honeycomb | Honeycomb | Honeycomb | Needle shape (one) | Needle shape (one) | Mesh |
| Catalyst | - | Loading on partition walls | Loading on partition walls | - | Packed bed | - |

(continued)

| Plasma reactor | Example 1 | Example 2 | Example 3 | Comp. Ex. 1 | Comp. Ex. 2 | Comp. Ex. 3 |
|---|---|---|---|---|---|---|
| $H_2$ (%) | 54.7 | 64.2 | 71.0 | 32.0 | 40.5 | 42.0 |
| | Good | Excellent | Excellent | Very bad | Bad | Bad |
| $CH_4$ (%) | 1.6 | 1.1 | 1.0 | 3.5 | 2.1 | 2.1 |
| $C_2H_2$ (%) | 1.8 | 1.2 | 1.1 | 4.1 | 2.0 | 2.0 |

The plasma reactors of Examples 1 to 3, generation of methane and acetylene, which were the by-products, could be inhibited besides the high hydrogen yield of the reformed gas to show good results. A plasma reactor of Example 2, where a catalyst was loaded on the partition walls of the honeycomb electrode, had high hydrogen yield and inhibited the generation of by-products to show a better result in comparison with the plasma reactor of Example 1, where no catalyst was loaded. In addition, the plasma reactor of Example 3, where a pair of linear electrodes are disposed with a honeycomb electrode sandwiched therebetween, had higher hydrogen yield and inhibited the generation of by-products to show an extremely good result in comparison with a plasma reactor of Example 2, where only one linear electrode was disposed.

On the other hand, the plasma reactors of Comparative Examples 1 to 3, had low hydrogen yield of the reformed gas and much generation of methane and acetylene as by-products to show a bad result in comparison with the plasma reactors of Examples 1 to 3.

In the plasma reactor of Comparative Examples 2, where a pellet type catalyst was filled, though improvement was shown in hydrogen yield and generation rate of by-produces in comparison with the plasma reactor of Comparative Example 1, they were behind those of the plasma reactors of Examples 1 to 3 to show a still insufficient result.

In addition, in a plasma reactor of Comparative Example 3, where a mesh electrode was disposed, though a little improvement was shown in hydrogen yield in comparison with the plasma reactor of Comparative Example 2, where a pair of linear electrodes were disposed, it was behind that of the plasma reactors of Examples 1 to 3 to show a still insufficient result. From the results, in the plasma reactor of Comparative Example 3, it was confirmed that the honeycomb structure functioned only as a conductor and did not function as an electrode.

As clear from these results, by employing a honeycomb electrode as one of a pair of electrodes, hydrogen yield can be improved, and generation of by-products can be inhibited; and, by loading a catalyst on the honeycomb electrode, the effects can further be enhanced. This seems to be because the honeycomb element is constituted of a porous conductive ceramic to cause micro discharge in gaps among ceramic particles (silicon carbide particles or the like). In particular, it is presumed that, in the case that a catalyst is loaded on the partition walls of the honeycomb electrode, the micro discharge strongly interacts (complex reaction) with the catalyst to allow steam reforming of isooctane to proceed effectively, thereby showing a high hydrogen generation.

Though an example of steam reforming was shown in the present Example, there were obtained results showing high hydrogen generation rate even in other reforming methods such as partial oxidation using oxygen and autothermal reforming using oxygen and water in comparison with a conventional plasma reactor. That is, it can be said that a plasma reactor of the present invention can be applied to various reforming methods.

Industrial Applicability

The plasma reactor of the present invention can suitably be used for a reforming reaction of hydrocarbon based compounds or alcohol, in particular for a hydrogen generation reaction. Since a large amount of reformed gas can be supplied stably for a long period of time, it can suitably be used also for an in-car fuel reformer, or the like.

## Claims

1. A plasma reactor (1A, 1B, 100) comprising: a reformer reactor having a feed port (4) for target gas (2) to be reformed and a discharge port (8) for reformed gas (6), a pair of electrodes (12) disposed to face each other in an internal space of the reformer reactor, and a pulse power source (14) for applying a pulse voltage to the electrodes; wherein one of the electrodes is a linear electrode (12a, 12c),
**characterized in that**
the other electrode is a honeycomb electrode (12b) which is composed of a conductive ceramic and has a plurality of cells functioning as gas flow passages and separated and formed by partition walls.

**2.** The plasma reactor according to Claim 1, wherein the linear electrode (12a, 12c) is a needle-shaped electrode or a stick-shaped electrode.

**3.** The plasma reactor according to Claim 1 or 2, wherein at least a pair of linear electrodes (12a, 12c) is provided being disposed to face each other sandwiching the honeycomb electrode (12b) therebetween.

**4.** The plasma reactor according to any one of Claims 1 to 3, wherein the reactor is further provided with a catalyst for accelerating reforming reaction of the target gas and wherein the catalyst is loaded on the partition walls of the honeycomb electrode.

**5.** The plasma reactor according to any one of Claims 1 to 4, wherein the catalyst is composed of a substance containing at least one element selected from the group consisting of noble metal, aluminum, nickel, zirconium, titanium, cerium, cobalt, manganese, zinc, copper, tin, iron, niobium, magnesium, lanthanum, samarium, bismuth, and barium.

**6.** The plasma reactor according to any one of Claims 1 to 4, wherein the catalyst is composed of a substance containing at least one element selected from the group consisting of platinum, rhodium, palladium, ruthenium, indium, silver, and gold.

**7.** The plasma reactor according to any one of Claims 1 to 6, wherein the honeycomb electrode (12b) is composed of conductive ceramic containing silicon carbide.

**8.** The plasma reactor according to any one of Claims 1 to 7, wherein the honeycomb electrode (12b) has a cell density of 4 to 186 cells/cm$^2$.

**9.** The plasma reactor according to any one of Claims 1 to 8, wherein the honeycomb electrode (12b) is disposed to have a distance of 1 to 30 mm from the linear electrode.

**10.** The plasma reactor according to any one of Claims 1 to 9, wherein the honeycomb electrode (12b) has a thermal conductivity of 10 to 300 W/mK.

**11.** The plasma reactor according to any one of Claims 1 to 10, wherein the pulse power source (14) is a high voltage pulse power source using an electrostatic induction thyristor as a switching element.

**12.** Use of a plasma reactor (1A, 1B, 100) according to any one of Claims 1 to 11 to generate a plasma between the pair of electrodes (12) and proceeding a reforming reaction by the plasma for generating hydrogen from a target gas.

**Patentansprüche**

**1.** Plasmareaktor (1A, 1B, 100), umfassend: einen Reformerreaktor mit einer Zufuhröffnung (4) für Zielgas (2), das reformiert werden soll, und eine Abgabeöffnung (8) für reformiertes Gas (6), ein Paar von Elektroden (12), die einander zugewandt in einem Innenraum des Reformerreaktors angeordnet sind, und eine Impulsspannungsquelle (14) zum Anlegen einer Impulsspannung an die Elektroden;
wobei eine der Elektroden eine lineare Elektrode (12a, 12c) ist,
**dadurch gekennzeichnet, dass**
die andere Elektrode eine Wabenelektrode (12b) ist, die aus einem leitenden Keramikmaterial besteht und eine Vielzahl von Zellen aufweist, die als Gasströmungsdurchlässe dienen und durch Trennwände getrennt und gebildet sind.

**2.** Plasmareaktor nach Anspruch 1, wobei die lineare Elektrode (12a, 12c) eine nadelförmige Elektrode oder eine stabförmige Elektrode ist.

**3.** Plasmareaktor nach Anspruch 1 oder 2, wobei zumindest ein Paar von linearen Elektroden (12a, 12c) einander zugewandt und die Wabenelektrode (12b) sandwichartig umschließend bereitgestellt ist.

**4.** Plasmareaktor nach einem der Ansprüche 1 bis 3, wobei der Reaktor weiters mit einem Katalysator zur Beschleunigung der Reformierreaktion des Zielgases ausgestattet ist, wobei der Katalysator auf die Trennwände der Wabenelektrode geladen ist.

**5.** Plasmareaktor nach einem der Ansprüche 1 bis 4, wobei der Katalysator aus einer Substanz besteht, die zumindest ein Element umfasst, das aus der aus Edelmetallen, Aluminium, Nickel, Zirkonium, Titan, Cer, Cobalt, Mangan, Zink, Kupfer, Zinn, Eisen, Niob, Magnesium, Lanthan, Samarium, Wismut und Barium bestehenden Gruppe ausgewählt ist.

**6.** Plasmareaktor nach einem der Ansprüche 1 bis 4, wobei der Katalysator aus einer Substanz besteht, die zumindest ein Element umfasst, das aus der aus Platin, Rhodium, Palladium, Ruthenium, Indium, Silber und Gold bestehenden Gruppe ausgewählt ist.

**7.** Plasmareaktor nach einem der Ansprüche 1 bis 6, wobei die Wabeneleketrode (12b) aus leitendem Keramikmaterial besteht, das Siliciumcarbid enthält.

**8.** Plasmareaktor nach einem der Ansprüche 1 bis 7, wobei die Wabeneleketrode (12b) eine Zelldichte von 4 bis 186 Zellen/cm$^2$ aufweist.

**9.** Plasmareaktor nach einem der Ansprüche 1 bis 8, wobei die Wabenelektrode (12b) so angeordnet ist, dass sie einen Abstand von 1 bis 30 mm zur linearen Elektrode aufweist.

**10.** Plasmareaktor nach einem der Ansprüche 1 bis 9, wobei die Wabenelektrode (12b) eine Wärmeleitfähigkeit von 10 bis 300 W/mK aufweist.

**11.** Plasmareaktor nach einem der Ansprüche 1 bis 10, wobei die Impulsspannungsquelle (14) eine Hochspannungsimpulsspannungsquelle ist, die einen elektrostatischen Induktionsthyristor als Schaltelement nutzt.

**12.** Verwendung eines Plasmareaktors (1 A, 1 B, 100) nach einem der Ansprüche 1 bis 11 zur Erzeugung von Plasma zwischen dem Paar von Elektroden (12) und zur Ausführung einer Reformierreaktion durch das Plasma zur Erzeugung von Wasserstoff aus einem Zielgas.

**Revendications**

**1.** Réacteur à plasma (1A, 1B, 100) comprenant : un réacteur de reformage comprenant un orifice d'alimentation (4) pour le gaz cible (2) devant être reformé et un orifice de sortie (8) pour le gaz reformé (6), une paire d'électrodes (12) disposées face à face dans un espace interne du réacteur de reformage, et une source de puissance d'impulsion (14) pour appliquer une tension d'impulsion aux électrodes ;
dans lequel l'une des électrodes est une électrode linéaire (12a, 12c),
**caractérisé en ce que**
l'autre électrode est une électrode nid d'abeille (12b) qui est composée d'une céramique conductrice et possède une pluralité d'alvéoles faisant office de passages d'écoulement gazeux et séparées et formées par des cloisons de séparation.

**2.** Réacteur à plasma selon la revendication 1, dans lequel l'électrode linéaire (12a, 12c) est une électrode en forme d'aiguille ou une électrode en forme de bâtonnet.

**3.** Réacteur à plasma selon la revendication 1 ou 2, dans lequel est prévue au moins une paire d'électrodes linéaires (12a, 12c), étant disposées face à face et prenant en sandwich l'électrode nid d'abeille (12b) entre elles.

**4.** Réacteur à plasma selon l'une quelconque des revendications 1 à 3, dans lequel le réacteur est en outre doté d'un catalyseur pour accélérer la réaction de reformage du gaz cible et dans lequel le catalyseur est chargé sur les cloisons de séparation de l'électrode nid d'abeille.

**5.** Réacteur à plasma selon l'une quelconque des revendications 1 à 4, dans lequel le catalyseur est composé d'une substance contenant au moins un élément choisi dans le groupe constitué par un métal noble, l'aluminium, le nickel, le zirconium, le titane, le cérium, le cobalt, le manganèse, le zinc, le cuivre, l'étain, le fer, le niobium, le magnésium, le lanthane, le samarium, le bismuth et le baryum.

**6.** Réacteur à plasma selon l'une quelconque des revendications 1 à 4, dans lequel le catalyseur est composé d'une substance contenant au moins un élément choisi dans le groupe constitué par le platine, le rhodium, le palladium, le ruthénium, l'indium, l'argent et l'or.

7. Réacteur à plasma selon l'une quelconque des revendications 1 à 6, dans lequel l'électrode nid d'abeille (12b) est composée de céramique conductrice contenant du carbure de silicium.

8. Réacteur à plasma selon l'une quelconque des revendications 1 à 7, dans lequel l'électrode nid d'abeille (12b) a une densité alvéolaire de 4 à 186 alvéoles/cm$^2$.

9. Réacteur à plasma selon l'une quelconque des revendications 1 à 8, dans lequel l'électrode nid d'abeille (12b) est disposée de sorte à se trouver à une distance de 1 à 30 mm de l'électrode linéaire.

10. Réacteur à plasma selon l'une quelconque des revendications 1 à 9, dans lequel l'électrode nid d'abeille (12b) a une conductivité thermique de 10 à 300 W/mK.

11. Réacteur à plasma selon l'une quelconque des revendications 1 à 10, dans lequel la source de puissance d'impulsion (14) est une source de puissance d'impulsion haute tension utilisant un thyristor à induction électrostatique comme élément de commutation.

12. Utilisation d'un réacteur à plasma (1A, 1B, 100) selon l'une quelconque des revendications 1 à 11 pour générer un plasma entre la paire d'électrodes (12) et exécuter une réaction de reformage au moyen du plasma pour générer de l'hydrogène à partir d'un gaz cible.

FIG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003073103 A
- JP 2004345879 A
- JP 2006056748 A